# EUROPEAN PATENT SPECIFICATION

(11) **EP 3 733 477 B1**
(45) Date of publication and mention of the grant of the patent: **19.07.2023**
(21) Application number: 20177443.7
(22) Date of filing: 29.05.2020
(51) Int. Cl.: B62B 3/02

(54) **FOLDABLE FRAME FOR A SHOPPING TROLLEY**
FALTBARER RAHMEN FÜR EINEN EINKAUFSWAGEN
CADRE PLIABLE POUR UN CHARIOT DE SUPERMARCHÉ

(30) Priority: 03.04.2019 ES 201930539 U
(43) Date of publication of application: 04.11.2020
(73) Proprietor: GARCIA MOLL, D. Jaime, 03700 Denia (ES)
(72) Inventor: GARCIA MOLL, D. Jaime, 03700 Denia (ES)
(74) Representative: Sanz-Bermell Martinez, Alejandro

(56) References cited:
- CN-U- 204 641 808
- ES-U- 1 047 678
- ES-U- 1 058 599
- US-A- 5 348 325

## Description

The object of the present invention is a foldable frame for a shopping trolley consisting of an upper half-frame and a lower half-frame; an articulation mechanism between the upper half-frame and the lower half-frame which facilitates the folding operation for the user, a support base for the bag of the shopping trolley with folding capacity on the lower half-frame, and a reinforcing structure which makes the support base of the bag rigid and is able to fold together with it.

### State of the art

There are several models of foldable trolleys.

ES 1 044 006 U describes a shopping trolley provided with a foldable base and a collapsible rear module which supports wheels and a pair of front supports for second wheels, each one articulated with respect to the vertical shaft which configures the main frame for the folding thereof.

ES 1 055 557 U discloses a telescopically collapsible frame for a shopping trolley.

ES 1 070 351 U discloses a foldable frame for a shopping trolley, with a support base carrying a set of wheels with a rotating support and a collapsible rear module for second wheels.

ES 1 041 293 U discloses a support base for shopping trolleys, which comprises a front structure carrying a set of wheels with a fixed axle common to both wheels, and also a collapsible rear module carrying another pair of wheels.

ES 1 019 403 U describes a frame for shopping trolleys and the like with a collapsible rear module carrying wheels and a front set of wheels supported on a fixed structure secured to the main frame. It is not foldable and has low stability due to the proximity of the front wheels to each other.

ES 1023908 U describes a frame similar to the previous one, wherein the previous fixed structure and support for the bag are equipped with two pairs of wheels.

ES 1 047 678 U describes a trolley comprising a double articulated frame, with a module carrying rear wheels, and the front wheels being secured to a lower front extension of the main frame, with a portion of said frame foldable by articulation.

ES 1 051 638 U describes a device for folding shopping trolley frames arranged in the main frame and which, depending on the articulation position thereof on the horizontal upright of said main frame, holds or leaves free the rotation of a secondary frame on said main frame.

As the state of the art closest to the invention, document ES 1047678 U describes a foldable shopping trolley comprising a lower half-frame provided with front wheels and an upper half-frame forming the handle of the trolley, this upper half-frame being collapsible on the lower half-frame.

CN 204 641 808 U describes a shopping vehicle comprising a collapsible frame, wherein said vehicle comprises an articulation mechanism which comprises a gear, a housing for the gear and a spring pushing the gear into the housing; wherein the actuation upon the gear release said gear from the housing and enable to fold the vehicle as long as the folding mechanism is being actuated upon, because if this were not done, the locking mechanism would be inserted into the housing only after having rotated a small angle, without having produced the folding of the shopping trolley.

One of the problems present in the mentioned carriages is that to fold the upper half-frame on the lower half-frame, it is necessary to simultaneously perform an action to release the articulation mechanism and an action to collapse one half-frame on the other, which requires attention to different portions of the trolley and since many parts have to be moved simultaneously, the force that must be exerted is high, which is particularly difficult for elderly people.

The object of the present invention is a foldable frame for a shopping trolley provided with the combination of some of those described in the prior art with an improved articulation mechanism of the frame which enables greater comfort when using the device, and a support structure of the bag which improves rigidity, such that advantages are obtained when used in terms of comfort, simplicity and safety.

### Description of the invention

The foldable frame of a shopping trolley object of the present invention comprises an upper half-frame, a lower half-frame at the lower end of which front wheels are arranged, a support structure for a bag, and a support for rear wheels.

A pair of articulation mechanisms is arranged between both half-frames, the upper half-frame and the lower half-frame, which enable the upper half-frame to fold on the lower half-frame. Each articulation mechanism is formed by two bodies, which define a housing for a locking element, and is able to be in two locking positions, a folded position and an extended position.

The advantage of said articulation mechanism is that by means of the movement of the locking element with a button, the relative rotation between the first body and the second body of the articulation mechanism is enabled, it being unnecessary to keep the button pressed while the relative rotation is performed between the first body and the second body of the articulation mechanism. Once the folded position is reached, the locking element locks the relative rotation between the first body and the second body of the articulation mechanism due to the action of a spring. The operation of the articulation mechanism is explained in detail below.

The support structure of the bag of the shopping trolley is made up of a base of the bag, a support body and a pair of joining straps, defining an articulated trapezoid, which enables the folding of the entire support structure in a joint manner, said configuration providing high rigidity to the support structure of the bag of the trolley.

Moreover, the support for the rear wheels folds on the lower half-frame, such that when it is folded, the front wheels and the rear wheels form four bearing points on the surface, remaining in the centre of gravity of the folded frame at a point perpendicular to the plane defined by said four bearing points, which enables the folded frame to be kept in an upright position.

### Brief description of the drawings

In order to illustrate the explanation that will follow, two sheets of drawings are attached to the present specification in which the essence of the present invention according to a particular embodiment is represented in four figures by way of example and without limitation, and in which:
- Figure 1: shows a perspective view of the frame for a shopping trolley, according to an embodiment of the present invention.
- Figure 2: shows a profile view of the frame for a shopping trolley, according to an embodiment of the present invention.
- Figure 3: shows a profile view of the frame for a shopping trolley with the base for the bag folded, according to an embodiment of the present invention.
- Figure 4: shows a profile view of the frame for a shopping trolley with the base for the bag folded, and with the articulation mechanism in the folded position, according to an embodiment of the present invention
- Figure 5: shows a profile view of the frame for a shopping trolley with the base for the bag folded, and with the articulation mechanism in the folded position, and with the support for the rear wheels folded, according to an embodiment of the present invention.
- Figure 6: shows a perspective view of the articulation mechanism, according to an embodiment of the present invention.
- Figure 7: shows an exploded view of the articulation mechanism, according to an embodiment of the present invention.
- Figure 8: shows a perspective view of the second body of the articulation mechanism, according to an embodiment of the present invention.

### Description of the preferred embodiments of the invention

In light of the aforementioned figures and according to the numbering adopted, a preferred exemplary embodiment of the invention can be seen in them, which comprises the parts and elements indicated and described in detail below.

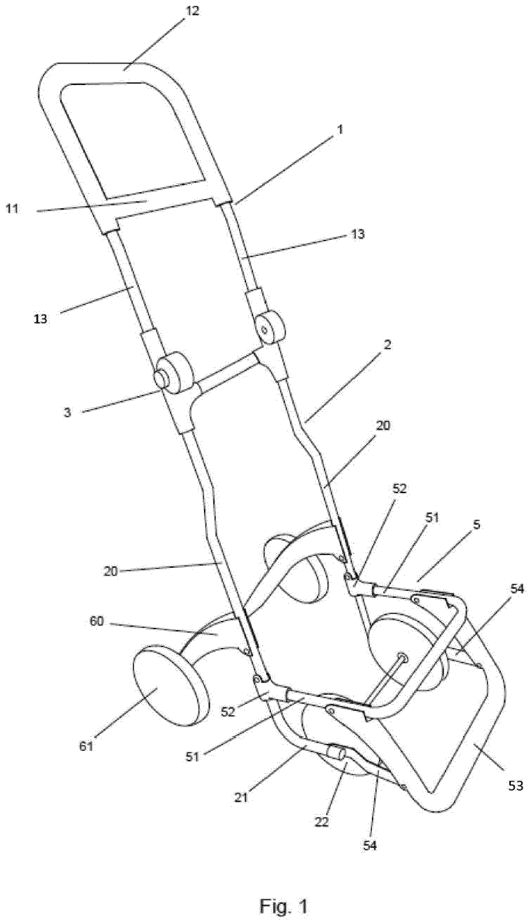

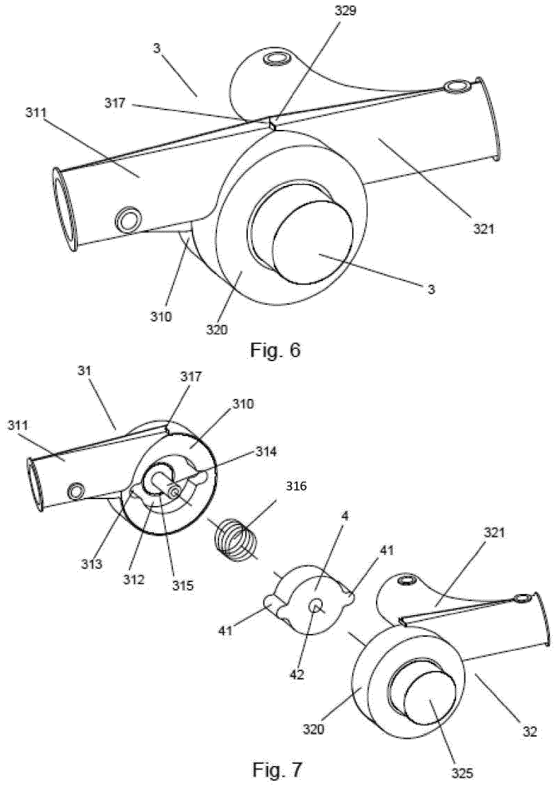

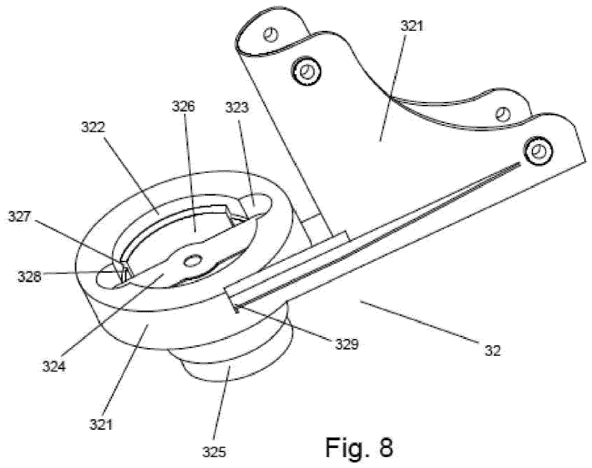

Thus, as seen in Figures 1 to 8, a possible preferred embodiment of the foldable frame of a shopping trolley comprises an upper half-frame (1), a lower half-frame (2), a support structure (5) of a bag, and a support (60) for the rear wheels (61).

The upper half-frame (1) is formed by a U-shaped structure comprising a crossbar (11) between the two branches (13) of said U in order to secure a bag, and in the upper portion of which it forms a handle (12) for the shopping trolley. The two branches (13) of the upper half-frame are formed by bars at the respective ends of which they articulate with the lower half-frame (2).

The lower half-frame (2), moreover, is formed by a structure also in the shape of a "U" formed by bars, the portions (21) of the ends of the branches (20) of said "U" having an arrangement perpendicular to the branches themselves, wherein the joint between said perpendicular portions (21) and each of the branches of the "U" forms a curve. Preferably, the lower half-frame (2) is formed by a single body. Front wheels (22) are arranged on a shaft joined to both ends of the perpendicular portions (21).

A pair of articulation mechanisms (3) are arranged between both half-frames (1, 2), one for each branch of the upper half-frame (1). Said articulation mechanism (3) is formed by two bodies, a first body (31) and a second body (32), each of the bodies having a substantially cylindrical cavity which define a housing for a locking element (4).

The locking element is formed by a cylindrical body comprising two diametrically opposed protuberances (41). The locking element (4) further comprises a cylindrical housing for the insertion of a spring (316) into one of the faces thereof, and comprises a through hole (42) in the geometric shaft thereof.

The first body (31) of the articulation mechanism (3) is formed by a first half-body (310) which defines a substantially cylindrical first cavity (312) comprising a pair of diametrically opposed lateral notches (313), able to house the locking element (4), the geometry of said first cavity (312) and the locking element (4) coinciding, said locking element (4) being able to be completely inserted into the first cavity (312); and a second housing half-body (311) for inserting one of the branches (13) of the upper half-frame (1). The shaft that passes through the geometric centre of the first cavity (312) is eccentric to the shaft of the second half-body (311) and, therefore, to the shaft of the branch (13) of the upper half-frame (1) which is inserted into said second half-body (311).

From the geometric centre of the first cavity (312) there emerges a protuberance (314), comprising a through hole, wherein the locking element (4) is inserted through the hole (42). The bottom of the first cavity (312) further forms a circular groove (315) wherein the spring (316) is inserted. Said spring (316) exerts a force on the locking element (4) which tends to move said locking element (4) towards the outside of the first cavity (312).

Moreover, the second body (32) comprises a first half-body (320) which defines a substantially cylindrical second cavity (322) comprising a pair of diametrically opposed lateral notches (324), the cross section of which coincides with the cross section of the locking element (4), and the depth of which is approximately half the height of the locking element (4); and it comprises a second half-body (321) which defines a housing with a curved shape that houses both the first segment of the branch of the "U" of the lower half-frame (2) and the first segment of the central portion of the "U" of the lower half-frame (2). The shaft that passes through the geometric centre of the second cavity (322) is eccentric to the shaft of the branch (20) of the lower half-frame (2) when the lower half-frame (2) is housed in said second half-body (321).

The bottom of the cavity (322) of the first half-body (320) of the second body (32) of the articulation mechanism (3) comprises an opening through which a button (325) is inserted from the outer portion of the second half-body (320), i.e., from the side opposite from the side wherein the cavity is formed and through which the locking element (4) is inserted.

The cavity (322) further comprises a diametral bridge (324), which enables the insertion of two branches (326) of the button (325), which are the branches that exert a force on the locking element (4) when the button (325) is actuated; and which acts as a stop of the locking element (4). The diametral bridge (324) further comprises a central hole wherein a joining element is inserted, for example, a rivet, which in turn crosses through the through hole of the protuberance (314), thereby joining the first body (31) and the second body (32). The joining element is in turn the shaft of relative rotation between the first body (31) and the second body (32). The branches (326) of the button comprise a flange (327) at the end thereof which are elastically coupled to a cornice (328) defined in the wall of the cavity (322) of the first half-body (320) of the second body (320), such that the extraction of the button (325) through the opening is prevented.

In this manner, when the articulation element (3) is assembled, i.e., the first body (31) and the second body (32) are joined by means of the joining element, the articulation element (3) is able to be in two locking positions, an extended position and a folded position. In the extended position, which can be seen in Figures 1, 2 and 3, the branches (13) of the upper half-frame (1) are aligned with the branches (20) of the second half-frame (2). The force exerted by the spring (316) against the locking element (4) causes half of the volume of the locking element (4) to be housed in the first cavity (312) and the other half of the volume of the locking element (4) to be housed in the second cavity (322), preventing the relative rotation between the first body (31) and the second body (32).

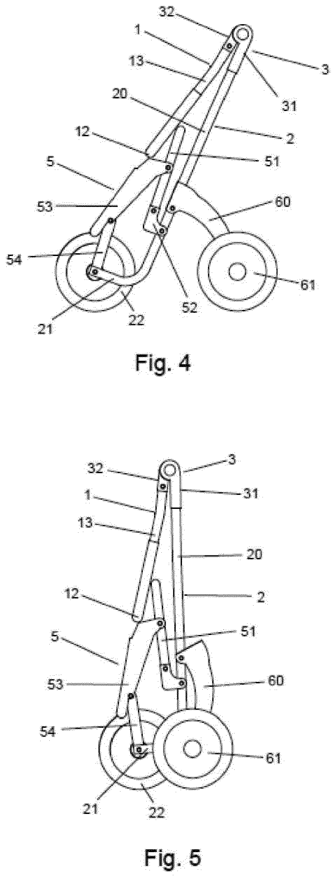

The locking of the relative rotation between the first body (31) and the second body (32) is caused by the insertion of the protuberances (41) in the lateral notches (313) of the first cavity (312) and in the lateral notches (324) of the second cavity (322). When the button (325) is pressed, the branches (326) of the button (325) push the locking element (4), overcoming the force exerted by the spring, causing the locking element (4) to be completely introduced into the first cavity (312). At this point, the relative rotation between the first body (31) and the second body (32) is enabled. Once the relative rotation has started between both bodies (31, 32), it is not necessary to keep the button (325) pressed for the rotation to continue taking place. Once a relative rotation of 180° has taken place between the first body (31) and the second body (32), the protuberances (41) of the locking element (4) are once again aligned with the lateral notches (324) of the second cavity (322), for which reason the force exerted by the spring (316) against the locking element (4) causes half of the volume of the locking element (4) to be housed again in the second cavity (322), the articulation mechanism (3) at this point being in the folded position, which can be seen in Figures 4 and 5. To return to the extended position, the same operation is repeated, but performing the relative rotation between both bodies (31, 32) in the opposite direction.

The first body (31) forms a first stop (317) on the surface thereof, and the second body (32) forms a second stop (329) on the surface thereof, which prevent the relative rotation between the first body (31) and the second body (32) in the direction opposite from the direction in which the folded position is reached from the extended position.

Moreover, the support structure (5) of the bag of the shopping trolley is formed by a base (51) of the bag , a support body (53) and a pair of joining straps (54).

The base (51) of the bag is formed by a body, preferably a U-shaped bar articulated at the ends thereof to the branches of the lower half-frame, above the perpendicular portions, extending in the unfolded position parallel to said perpendicular portions of the lower half-frame, and when it is in the folded position, it extends parallel to the branches of the lower half-frame. Normally, the base (51) of the bag is joined to articulation parts (52) which enable the relative rotation of the base (51) of the bag with respect to the lower half-frame (2) towards the folded position, but prevent the relative rotation of the base (51) of the bag with respect to the lower half-frame (2) towards the other direction, since said articulation parts (52) comprise a portion or segment surrounding the branch (20) of the lower half-frame (2) and acts as a stop.

In turn, the support body (53) is U-shaped, and is articulated at the ends thereof to the base (51) of the bag . In order to provide rigidity to the base (51) of the bag and support body (53) assembly, said support body (53) is joined to the ends of the perpendicular portions (21) of the lower half-frame (2) by means of the joining straps (54), articulated at both ends.

In this manner, the support structure of the bag of the trolley together with the branches of the lower half-frame forms an articulated trapezoid.

Moreover, the rear wheels (61) are arranged in a support (60) articulated to the branches of the lower half-frame (2), on the side opposite from the support structure (5) of the bag of the trolley.

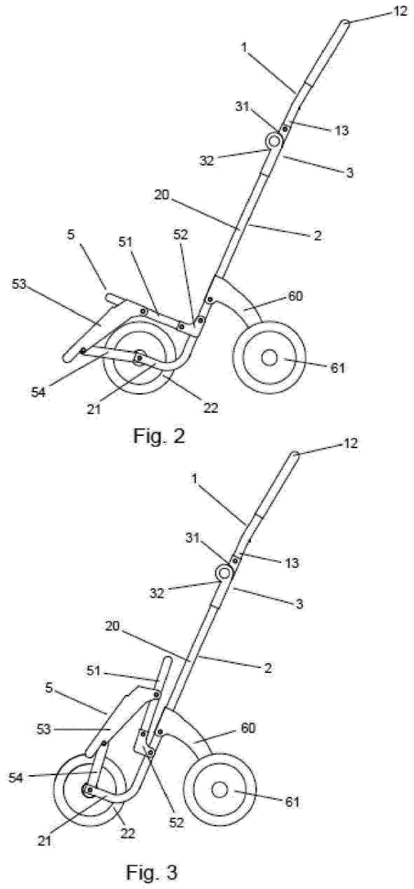

Figure 3 shows the folded shape of the support structure (5) of the bag of the shopping trolley, and Figure 4 shows the folding of the upper half-frame (1) on the lower half-frame (2). Figure 5 shows the shopping trolley frame object of the present invention, wherein both the support structure (5) of the bag of the shopping trolley, as well as the upper half-frame (1) and the support (60) for the rear wheels (61) are in the folded position. Said Figure 5 shows that when the support (60) for the rear wheels (61) is folded on the lower half-frame (2), the front wheels (22) and the rear wheels (61) form four bearing points on the surface, staying in the centre of gravity of the folded frame at a point perpendicular to the plane defined by said four bearing points, enabling the folded frame to be kept in an upright position.

## Claims

1. A foldable frame for a shopping trolley, comprising an upper half-frame (1), a lower half-frame (2), an articulation mechanism (3) between the upper half-frame and the lower half-frame, a support structure (5) for a bag, and a support (60) for the rear wheels (61), wherein:
• the upper half-frame (1) is formed by a U-shaped structure comprising a crossbar (11) between the two branches (13) of said U in order to secure a bag, and in the upper portion of which it forms a handle (12) for the shopping trolley, the two branches (13) of the upper half-frame being formed by bars at the respective ends of which they articulate with the lower half-frame (2);
• the lower half-frame (2) is formed by a U-shaped structure formed by bars, with a front wheel (22) being arranged at the lower end of each of the branches (20) of said U-shaped structure;
• the support (60) for the rear wheels is articulated to the branches (20) of the lower half-frame (2) and is able to be folded on said lower half-frame (2);
**characterised in that** the articulation mechanism (3) is formed by two bodies, a first body (31) and a second body (32), each of the bodies having a substantially cylindrical cavity which define a housing for a locking element (4), the locking element being a cylindrical body comprising two diametrically opposed protuberances (41), wherein:
• the first body (31) of the articulation mechanism (3) is formed by a first half-body (310) which defines a substantially cylindrical first cavity (312) comprising a pair of diametrically opposed lateral notches (313), able to house the locking element (4), the geometry of said first cavity (312) and the locking element (4) coinciding, said locking element (4) being able to be completely inserted into the first cavity (312); and a second housing half-body (311) for inserting one of the branches (13) of the upper half-frame (1); the shaft that passes through the geometric centre of the first cavity (312) being eccentric to the shaft of the second half-body (311) and, therefore, to the shaft of the branch (13) of the upper half-frame (1) which is inserted into said second half-body (311); there emerging from the geometric centre of the first cavity (312) a protuberance (314), comprising a through hole able to house a joining element between the first body (31) and the second body (32), wherein the locking element (4) is inserted through the hole (42); the bottom of the first cavity (312) forming a circular groove (315) for inserting a spring (316), said spring (316) exerting a force on the locking element (4) which tends to move said locking element (4) towards the outside of the first cavity (312);
• the second body (32) comprises a first half-body (320) which defines a substantially cylindrical second cavity (322) comprising a pair of diametrically opposed lateral notches (324), the cross section of which coincides with the cross section of the locking element (4), and the depth of which is approximately half the height of the locking element (4); and it comprises a second half-body (321) which defines a housing with a curved shape that houses both the first segment of the branch of the "U" of the lower half-frame (2) and the first segment of the central portion of the "U" of the lower half-frame (2); the shaft that passes through the geometric centre of the second cavity (322) being eccentric to the shaft of the branch (20) of the lower half-frame (2) when the lower half-frame (2) is housed in said second half-body (321); the bottom of the cavity (322) of the first half-body (320) of the second body (32) of the articulation mechanism (3) comprising an opening through which a button (325) is inserted from the outer portion of the second half-body (320), i.e., from the side opposite from the side wherein the cavity is formed and through which the locking element (4) is inserted; wherein the second cavity (322) further comprises a diametral bridge (324), which enables the insertion of two branches (326) of the button (325), said branches (326) exerting a force on the locking element (4) when the button (325) is actuated; the diametral bridge (324) being a stop of the locking element (4) in the second cavity (322); and the diametral bridge (324) comprising a central hole wherein the joining element is inserted which crosses through the through hole of the protuberance (314) and joins the first body (31) and the second body (32).

2. The foldable frame for a shopping trolley according to claim 1, **characterised in that** the branches (326) of the button comprise a flange (327) at the end thereof which are elastically coupled to a cornice (328) defined in the wall of the second cavity (322) of the first half-body (320) of the second body (320).

3. The foldable frame for a shopping trolley according to any of claims 1 to 2, **characterised in that** the first body (31) forms a first stop (317) on the surface thereof, and the second body (32) forms a second stop (329) on the surface thereof, said stops preventing the relative rotation between the first body (31) and the second body (32) in the direction opposite from the direction in which the folded position is reached from the extended position.

4. The foldable frame for a shopping trolley according to any of claims 1 to 3, **characterised in that** the support structure (5) of the bag of the shopping trolley is formed by a base (51) of the bag, a support body (53) and a pair of joining straps (54).

5. The foldable frame for a shopping trolley according to claim 4 **characterised in that** the base (51) of the bag is formed by a U-shaped body articulated to the branches (20) of the lower half-frame (2); the support body (53) is U-shaped, and is articulated at the ends thereof to the base (51) of the bag ; and **in that** the support body (53) is joined to the branches (20) by means of the joining straps (51), articulated at both ends, the support structure of the bag forming an articulated trapezoid.

6. The foldable frame for a shopping trolley according to claim 5 **characterised in that** the base (51) of the bag is joined to articulation parts (52) which enable the relative rotation of the base (51) of the bag with respect to the lower half-frame (2) towards a folded position, but prevent the relative rotation of the base (51) of the bag with respect to the lower half-frame (2) towards the other direction, said articulation parts (52) comprising a portion or segment surrounding the branch (20) of the lower half-frame (2) which acts as a stop.

7. The foldable frame for a shopping trolley according to any of the preceding claims, **characterised in that** the portions (21) of the ends of the branches (20) of the lower half-frame (2) have an arrangement perpendicular to the branches (20) themselves, wherein the joint between said perpendicular portions (21) and each of the branches (20) of the "U" forms a curve, and wherein the front wheels (22) are arranged on a shaft joined to both ends of the perpendicular portions (21).

8. The foldable frame for a shopping trolley according to any of the preceding claims, **characterised in that** when the support (60) for the rear wheels (61) is folded on the lower half-frame (2), the front wheels (22) and the rear wheels (61) form four bearing points on the surface, staying in the centre of gravity of the folded frame at a point perpendicular to the plane defined by said four bearing points, enabling the folded frame to be kept in an upright position.

## Patentansprüche

1. Zusammenklappbares Gestell für einen Einkaufswagen, umfassend einen oberen Halbrahmen (1), einen unteren Halbrahmen (2), einen Gelenkmechanismus (3) zwischen dem oberen Halbrahmen und dem unteren Halbrahmen, eine Stützstruktur (5) für eine Tasche und eine Stütze (60) für die Hinterräder (61), wobei:
• der obere Halbrahmen (1) durch eine U-förmige Struktur gebildet ist, die eine Querstange (11) zwischen den beiden Schenkeln (13) des U umfasst, um eine Tasche zu befestigen, und in deren oberen Abschnitt sie einen Handgriff (12) für den Einkaufswagen bildet, wobei die beiden Schenkel (13) des oberen Halbrahmens durch Stangen gebildet sind, an deren jeweiligen Enden sie mit dem unteren Halbrahmen (2) gelenkig verbunden sind;
• der untere Halbrahmen (2) durch eine aus Stangen gebildete U-förmige Struktur gebildet ist, wobei am unteren Ende jedes der Schenkel (20) der U-förmigen Struktur ein Vorderrad (22) angeordnet ist;
• die Stütze (60) für die Hinterräder an den Schenkeln (20) des unteren Halbrahmens (2) angelenkt ist und auf den unteren Halbrahmen (2) geklappt werden kann;
**dadurch gekennzeichnet, dass** der Gelenkmechanismus (3) durch zwei Körper gebildet ist, einen ersten Körper (31) und einen zweiten Körper (32), wobei jeder der Körper einen im Wesentlichen zylindrischen Hohlraum aufweist, die ein Gehäuse für ein Verriegelungselement (4) definieren, wobei das Verriegelungselement ein zylindrischer Körper ist, der zwei diametral gegenüberliegende Vorsprünge (41) umfasst, wobei:
• der erste Körper (31) des Gelenkmechanismus (3) durch einen ersten Halbkörper (310), der einen im Wesentlichen zylindrischen ersten Hohlraum (312) definiert, der ein Paar diametral gegenüberliegender seitlicher Kerben (313) umfasst, die das Verriegelungselement (4) aufnehmen können, wobei die Geometrie des ersten Hohlraums (312) und des Verriegelungselements (4) übereinstimmen, wobei das Verriegelungselement (4) vollständig in den ersten Hohlraum (312) eingeführt werden kann; und einen zweiten Gehäusehalbkörper (311) zum Einführen eines der Schenkel (13) des oberen Halbrahmens (1) gebildet ist; wobei die Welle, die durch das geometrische Zentrum des ersten Hohlraums (312) verläuft, exzentrisch zur Welle des zweiten Halbkörpers (311) und daher zur Welle des Schenkels (13) des oberen Halbrahmens (1) ist, der in den zweiten Halbkörper (311) einführt ist; wobei aus dem geometrischen Zentrum des ersten Hohlraums (312) ein Vorsprung (314) hervortritt, der ein Durchgangsloch umfasst, das in der Lage ist, ein Verbindungselement zwischen dem ersten Körper (31) und dem zweiten Körper (32) aufzunehmen, wobei das Verriegelungselement (4) durch das Loch (42) eingeführt wird; wobei die Unterseite des ersten Hohlraums (312) eine kreisförmige Nut (315) zum Einsetzen einer Feder (316) bildet, wobei die Feder (316) eine Kraft auf das Verriegelungselement (4) ausübt, die dazu neigt, das Verriegelungselement (4) zur Außenseite des ersten Hohlraums (312) hin zu bewegen;
• der zweite Körper (32) einen ersten Halbkörper (320) umfasst, der einen im Wesentlichen zylindrischen zweiten Hohlraum (322) definiert, der ein Paar diametral gegenüberliegender seitlicher Kerben (324) umfasst, deren Querschnitt mit dem Querschnitt des Verriegelungselements (4) übereinstimmt, und dessen Tiefe etwa die Hälfte der Höhe des Verriegelungselements (4) beträgt; und einen zweiten Halbkörper (321) umfasst, der ein Gehäuse mit einer gekrümmten Form definiert, das sowohl das erste Segment des Schenkels des "U" des unteren Halbrahmens (2) als auch das erste Segment des Mittelabschnitts des "U" des unteren Halbrahmens (2) aufnimmt; wobei die Welle, die durch das geometrische Zentrum des zweiten Hohlraums (322) verläuft, exzentrisch zur Welle des Schenkels (20) des unteren Halbrahmens (2) ist, wenn der untere Halbrahmen (2) in dem zweiten Halbkörper (321) aufgenommen ist; wobei die Unterseite des Hohlraums (322) des ersten Halbkörpers (320) des zweiten Körpers (32) des Gelenkmechanismus (3) eine Öffnung umfasst, durch die ein Knopf (325) von dem äußeren Abschnitt des zweiten Halbkörpers (320) eingeführt wird, d. h. von der Seite, die der Seite gegenüberliegt, in der der Hohlraum gebildet ist und durch die das Verriegelungselement (4) eingeführt wird; wobei der zweite Hohlraum (322) ferner eine diametrale Brücke (324) umfasst, die das Einführen von zwei Schenkeln (326) des Knopfs (325) ermöglicht, wobei die Schenkel (326) eine Kraft auf das Verriegelungselement (4) ausüben, wenn der Knopf (325) betätigt wird; wobei die diametrale Brücke (324) ein Anschlag des Verriegelungselements (4) in dem zweiten Hohlraum (322) ist; und die diametrale Brücke (324) ein zentrales Loch umfasst, in das das Verbindungselement einführt ist, das das Durchgangsloch des Vorsprungs (314) durchquert und den ersten Körper (31) und den zweiten Körper (32) verbindet.

2. Zusammenklappbares Gestell für einen Einkaufswagen nach Anspruch 1, **dadurch gekennzeichnet, dass** die Schenkel (326) des Knopfes einen Flansch (327) an dessen Ende aufweisen, der elastisch mit einem Gesims (328) gekoppelt ist, das in der Wand des zweiten Hohlraums (322) des ersten Halbkörpers (320) des zweiten Körpers (320) gebildet ist.

3. Zusammenklappbares Gestell für einen Einkaufswagen nach einem der Ansprüche 1 bis 2, **dadurch gekennzeichnet, dass** der erste Körper (31) einen ersten Anschlag (317) auf seiner Oberfläche bildet und der zweite Körper (32) einen zweiten Anschlag (329) auf seiner Oberfläche bildet, wobei die Anschläge die Relativdrehung zwischen dem ersten Körper (31) und dem zweiten Körper (32) in der Richtung entgegengesetzt zu der Richtung, in der die zusammengeklappte Position von der ausgezogenen Position erreicht wird, verhindern.

4. Zusammenklappbares Gestell für einen Einkaufswagen nach einem der Ansprüche 1 bis 3, **dadurch gekennzeichnet, dass** die Stützstruktur (5) der Tasche des Einkaufswagens durch einen Boden (51) der Tasche, einen Stützkörper (53) und ein Paar Verbindungsbänder (54) gebildet ist.

5. Zusammenklappbares Gestell für einen Einkaufswagen nach Anspruch 4, **dadurch gekennzeichnet, dass** der Boden (51) der Tasche durch einen U-förmigen Körper gebildet ist, der an den Schenkeln (20) des unteren Halbrahmens (2) angelenkt ist; der Stützkörper (53) U-förmig ist und an seinen Enden an den Boden (51) der Tasche angelenkt ist; und dass der Stützkörper (53) mit den Schenkeln (20) mittels der Verbindungsbänder (51) verbunden ist, die an beiden Enden gelenkig sind, wobei die Stützstruktur der Tasche ein gelenkiges Trapezoid bildet.

6. Zusammenklappbares Gestell für einen Einkaufswagen nach Anspruch 5, **dadurch gekennzeichnet, dass** der Boden (51) der Tasche mit Gelenkteilen (52) verbunden ist, die die relative Drehung des Bodens (51) der Tasche in Bezug auf den unteren Halbrahmen (2) in eine zusammengeklappte Position ermöglichen, aber die relative Drehung des Bodens (51) der Tasche in Bezug auf den unteren Halbrahmen (2) in die andere Richtung verhindern, wobei die Gelenkteile (52) einen Abschnitt oder ein Segment umfassen, der bzw. das den Schenkel (20) des unteren Halbrahmens (2) umgibt, der bzw. die als Anschlag dient.

7. Zusammenklappbares Gestell für einen Einkaufswagen nach einem der vorhergehenden Ansprüche, **dadurch gekennzeichnet, dass** die Abschnitte (21) der Enden der Schenkel (20) des unteren Halbrahmens (2) eine Anordnung senkrecht zu den Schenkeln (20) selbst aufweisen, wobei die Verbindung zwischen den senkrechten Abschnitten (21) und jedem der Schenkel (20) des "U" eine Kurve bildet, und wobei die Vorderräder (22) auf einer Welle angeordnet sind, die mit beiden Enden der senkrechten Abschnitte (21) verbunden ist.

8. Zusammenklappbares Gestell für einen Einkaufswagen nach einem der vorhergehenden Ansprüche, **dadurch gekennzeichnet, dass,** wenn die Stütze (60) für die Hinterräder (61) auf den unteren Halbrahmen (2) geklappt ist, die Vorderräder (22) und die Hinterräder (61) vier Lagerpunkte auf der Oberfläche bilden, wobei sie in der Mitte der Schwerkraft des zusammengeklappten Gestells an einem Punkt senkrecht zu der Ebene, die durch die vier Lagerpunkte definiert ist, bleiben, wodurch das zusammengeklappte Gestell in einer aufrechten Position gehalten werden kann.

## Revendications

1. Châssis pliable pour caddie, comprenant un demi-châssis supérieur (1), un demi-châssis inférieur (2), un mécanisme d'articulation (3) entre le demi-châssis supérieur et le demi-châssis inférieur, une structure de support (5) pour un sac, et un support (60) pour les roues arrière (61), dans lequel :
• le demi-châssis supérieur (1) est formé par une structure en forme de U comprenant une traverse (11) entre les deux branches (13) dudit U pour la fixation d'un sac, et dans la partie supérieure de laquelle il forme un poignée (12) pour le caddie, les deux branches (13) du demi-châssis supérieur étant formées par des barres aux extrémités respectives desquelles elles s'articulent avec le demi-châssis inférieur (2) ;
• le demi-châssis inférieur (2) est formé par une structure en forme de U formée par des barres, une roue avant (22) étant agencée au niveau de l'extrémité inférieure de chacune des branches (20) de ladite structure en forme de U ;
• le support (60) pour les roues arrière est articulé aux branches (20) du demi-châssis inférieur (2) et est apte à se replier sur ledit demi-châssis inférieur (2) ;
**caractérisé en ce que** le mécanisme d'articulation (3) est formé de deux corps, un premier corps (31) et un second corps (32), chacun des corps ayant une cavité sensiblement cylindrique qui définit un logement pour un élément de verrouillage (4), l'élément de verrouillage étant un corps cylindrique comprenant deux protubérances diamétralement opposées (41), dans lequel :
• le premier corps (31) du mécanisme d'articulation (3) est formé par un premier demi-corps (310) qui définit une première cavité (312) sensiblement cylindrique comprenant une paire d'encoches latérales diamétralement opposées (313), apte à loger l'élément de verrouillage (4), la géométrie de ladite première cavité (312) et de l'élément de verrouillage (4) coïncidant, ledit élément de verrouillage (4) pouvant être complètement inséré dans la première cavité (312) ; et un second demi-corps de logement (311) pour l'insertion de l'une des branches (13) du demi-châssis supérieur (1) ; l'arbre passant par le centre géométrique de la première cavité (312) étant excentré par rapport à l'arbre du second demi-corps (311) et, donc, par rapport à l'arbre de la branche (13) du demi-châssis supérieur (1) qui est insérée dans ledit second demi-corps (311) ; émergeant du centre géométrique de la première cavité (312) se trouve une protubérance (314), comprenant un trou traversant apte à loger un élément de jonction entre le premier corps (31) et le second corps (32), dans lequel l'élément de verrouillage (4) est inséré à travers le trou (42) ; le fond de la première cavité (312) formant une rainure circulaire (315) pour l'insertion d'un ressort (316), ledit ressort (316) exerçant une force sur l'élément de verrouillage (4) qui tend à déplacer ledit élément de verrouillage (4) vers l'extérieur de la première cavité (312) ;
• le second corps (32) comprend un premier demi-corps (320) qui définit une seconde cavité (322) sensiblement cylindrique comprenant une paire d'encoches latérales diamétralement opposées (324), dont la section transversale coïncide avec la section transversale de l'élément de verrouillage (4), et dont la profondeur est approximativement la moitié de la hauteur de l'élément de verrouillage (4) ; et il comprend un second demi-corps (321) qui définit un logement avec une forme incurvée qui loge à la fois le premier segment de la branche du « U » du demi-châssis inférieur (2) et le premier segment de la partie centrale du « U » du demi-châssis inférieur (2) ; l'arbre passant par le centre géométrique de la seconde cavité (322) étant excentré par rapport à l'arbre de la branche (20) du demi-châssis inférieur (2) lorsque le demi-châssis inférieur (2) est logé dans ledit second demi-corps (321); le fond de la cavité (322) du premier demi-corps (320) du second corps (32) du mécanisme d'articulation (3) comprenant une ouverture à travers laquelle un bouton (325) est inséré depuis la partie externe du second demi-corps (320), i.e., depuis le côté opposé au côté dans lequel la cavité est formée et à travers lequel l'élément de verrouillage (4) est inséré ; dans lequel la seconde cavité (322) comprend en outre un pont diamétral (324), qui permet l'insertion de deux branches (326) du bouton (325), lesdites branches (326) exerçant un effort sur l'élément de verrouillage (4) lorsque le bouton (325) est actionné ; le pont diamétral (324) étant une butée de l'élément de verrouillage (4) dans la seconde cavité (322) ; et le pont diamétral (324) comprenant un trou central dans lequel l'élément de jonction est inséré qui traverse le trou traversant de la protubérance (314) et joint le premier corps (31) et le second corps (32).

2. Châssis pliable pour caddie selon la revendication 1, **caractérisé en ce que** les branches (326) du bouton comprennent au niveau de leur extrémité une collerette (327) qui est accouplée élastiquement à une corniche (328) définie dans la paroi de la seconde cavité (322) du premier demi-corps (320) du second corps (320).

3. Châssis pliable pour caddie selon l'une quelconque des revendications 1 à 2, **caractérisé en ce que** le premier corps (31) forme une première butée (317) sur sa surface, et le second corps (32) forme une seconde butée (329) sur sa surface, lesdites butées empêchant la rotation relative entre le premier corps (31) et le second corps (32) dans la direction opposée à la direction dans laquelle la position repliée est atteinte depuis la position déployée.

4. Châssis pliable pour caddie selon l'une quelconque des revendications 1 à 3, **caractérisé en ce que** la structure de support (5) du sac du caddie est formée par **une** base (51) du sac, un corps de support (53) et une paire de sangles de jonction (54).

5. Châssis pliable pour caddie selon la revendication 4, **caractérisé en ce que** la base (51) du sac est formée par un corps en forme de U articulé aux branches (20) du demi-châssis inférieur (2) ; le corps de support (53) est en forme de U, et est articulé au niveau de ses extrémités sur la base (51) du sac ; et **en ce que** le corps de support (53) est joint aux branches (20) au moyen des sangles de jonction (51), articulé au niveau des deux extrémités, la structure de support du sac formant un trapèze articulé.

6. Châssis pliable pour caddie selon la revendication 5, **caractérisé en ce que** la base (51) du sac est jointe à des pièces d'articulation (52) qui permettent la rotation relative de la base (51) du sac par rapport au demi-châssis inférieur (2) vers une position repliée, mais empêchent la rotation relative de la base (51) du sac par rapport au demi-châssis inférieur (2) vers l'autre direction, lesdites pièces d'articulation (52) comprenant une portion ou segment entourant la branche (20) du demi-châssis inférieur (2) qui sert de butée.

7. Châssis pliable pour caddie selon l'une quelconque des revendications précédentes, **caractérisé en ce que** les portions (21) des extrémités des branches (20) du demi-châssis inférieur (2) ont un agencement perpendiculaire aux branches (20) elles-mêmes, dans lequel le joint entre lesdites portions perpendiculaires (21) et chacune des branches (20) du « U » forme une courbe, et dans lequel les roues avant (22) sont agencées sur un arbre joint aux deux extrémités des portions perpendiculaires (21).

8. Châssis pliable pour caddie selon l'une quelconque des revendications précédentes, **caractérisé en ce que** lorsque le support (60) pour les roues arrière (61) est replié sur le demi-châssis inférieur (2), les roues avant (22) et les roues arrière (61) forment quatre points d'appui sur la surface, restant au centre de gravité du châssis replié au niveau d'un point perpendiculaire au plan défini par lesdits quatre points d'appui, permettant de maintenir le châssis replié en position verticale.
